Europäisches Patentamt

European Patent Office

Office européen des brevets

(19)

(11) Publication number: 0 147 057
A2

# EUROPEAN PATENT APPLICATION

(12)

(21) Application number: 84308103.5

(22) Date of filing: 22.11.84

(51) Int. Cl.⁴: B 65 D 8/04

(30) Priority: 02.12.83 GB 8332216

(43) Date of publication of application:
03.07.85 Bulletin 85/27

(84) Designated Contracting States:
AT BE CH DE FR IT LI LU NL SE

(71) Applicant: METAL BOX p.l.c.
Queens House Forbury Road
Reading RG1 3JH Berkshire(GB)

(72) Inventor: Ashley, Robert John
40 Town End Road
Faringdon Oxon SN7 7UR(GB)

(72) Inventor: Bardhan, Nabendu
7 Penn Close Peachcroft Farm
Abingdon Oxon OX14 2NX(GB)

(72) Inventor: Panvalker, Suresh Gajanan
27 Carlton Gate
Swindon Wilts SN3 1NP(GB)

(72) Inventor: Rayner, Adrien Patrick
Huntsmoor Lodge
Delford Close Iver Bucks(GB)

(74) Representative: Sawers, Lawrence Peter et al,
PAGE, WHITE & FARRER 5 Plough Place New Fetter Lane
London EC4A 1HY(GB)

(54) Container having a metal body attached to a polymeric component.

(57) A container for an aqueous or non-aqueous product, such as a paint, has a tubular metal body with at least one component of a polymeric material attached thereto, such as pivot lugs (28) for a carrying handle or a top ring (141) for receiving a conventional plug type lid or a base member (29) of the container. The polymeric component or components is or are attached to respective bare metal portions of the surface of the metal body (10) by means of an adhesive essentially composed of a polyolefin chemically modified to increase the content of polar groups so as to promote development of bond strength between the polymeric component and the metal. The polymeric material of the components may be a propylene based polymer or copolymer or a polyamide (nylon) and the adhesive a polypropylene modified by a maleic anhydride graft.

FIG. 3.

EP 0 147 057 A2

## CONTAINER HAVING A METAL BODY ATTACHED TO A POLYMERIC COMPONENT

This invention relates to containers comprising a tubular metal body and at least one component of a polymeric material attached thereto. Such containers may be used for aqueous products, for example water-based paints, and for non-aqueous products.

Aqueous-based and nonaqueous-based paint formulations for household applications are normally packaged in metal containers made from tinplate. Such containers are usually produced by first forming a body cylinder of appropriate dimensions by bending a piece of tinplate followed by either soldering or welding a side-seam. The body cylinder is then assembled with a circular metal base and a metal top ring, to receive a lid, by using the technique known in the trade as double-seaming. All the metal surfaces are coated with a layer of a protective lacquer to prevent or reduce corrosion.

This type of metal container is produced in a range of sizes. Larger size containers, i.e those with a capacity of 2.5 litres and above, are each fitted with a handle to enable them to be carried conveniently. To fit the handle to the container, two holes are punched in the body cylinder diametrically opposite to each other and nearer to the open end, to enable two metal heads to be rivetted into it. The handle can then be assembled by fitting its two end-holes on to the metal heads. The handle can be made either from metal plate or, more commonly, from a thermoplastic material.

Because of its smooth shining metallic surface, the container is capable of accepting a very high quality print and is therefore most attractive to the customer. Although widely used, the container is neverthless prone to corrosion in areas around the rivetted heads inside the container, at the inside surface of the top ring where it contacts the lid and around the edge of the base. This proneness to corrosion is due to the susceptibility of the protective coating in these areas to damage.

When holes are punched into tinplate, as when metal heads are rivetted for fitting handles, sharp edges are created which are difficult to protect. When these edges come into contact with aqueous products, corrosion of the plate in these areas occurs and becomes progressive. The proneness to corrosion of the areas around the inside of the metal top ring is due to the fact that the protective coating is invariably rubbed off by the friction and the consequent abrasive action between the lid and ring surfaces when the lid is pressed home and then prised off, as when in use. Similarly, the protective coating on the base edge of the container tends to get rubbed off during transportation and general handling, thus creating an unprotected metal surface.

Polymeric materials are, of course, not subject to corrosion by aqueous products in the same manner as metals such as tinplate, but they do not provide the same attractive appearance if used for the container body, and the use of polymeric components attached to a metal container body has hitherto involved problems of ensuring adequate strength in the joints between the polymeric components and the metal.

It is an object of the present invention to provide a container which retains the advantages of a metal body but which, as a result of the use of at least one component of polymeric material, does not have the areas of proneness to corrosion described above, and which nevertheless possesses acceptable strength characteristics.

According to the present invention, there is provided a container, comprising a tubular metal body and at least one component of a polymeric material attached thereto, wherein a surface on the polymeric component is attached by adhesive to a complementary cooperating bare metal surface of the tubular body in such a manner that, in use, the adhesive joint between the said surfaces is subjected to a shear mode of loading, and the adhesive is essentially composed of a polyolefin chemically modified to increase the content of polar groups so as to promote development of bond strength between the polymeric component and the metal.

Preferably the polyolefin is a polypropylene or a copolymer of propylene and ethylene, and the content of polar groups is increased by addition of at least one of the group of additives consisting of maleic anhydride, maleic acid and acrylic acid. The polymeric material of the component may be a polyolefin or a polyamide.

Preferably the metal body is coated with a protective lacquer except over the surface to which the polymeric component is attached.

The polymeric component may be a pivot lug which retains an end of a curved carrying handle, the pivot lug having an enlarged base providing the surface which is attached by the adhesive to the surface of the metal body.

The polymeric component may also be an end ring having a flange extending axially of the tubular body, the flange carrying the surface which is attached by the adhesive to the bare metal surface of the body. This polymeric ring may be attached to the top end of the tubular body and may carry a pair of pivot lugs for retaining the ends of a curved carrying handle.

Further, the polymeric component may also be an end wall for the tubular body, said end wall comprising a panel spanning the end of the body and a flange extending axially of the container body, the flange carrying the surface which is attached by the adhesive to the bare metal surface of the body.

It is found that, by constructing the adhesive joint so that it is stressed in shear and by attaching the polymeric component to a bare (uncoated) metal surface of the body by means of the specified adhesive, a high strength can be ensured in the joint. Where the polymeric component is a pivot lug, it thus becomes possible to avoid the need for rivetting through holes in the body, so avoiding the production of sharp edges which are difficult to protect from corrosion. When the component is an end ring or an end wall, which

being of polymeric material are inherently not liable to corrosion, the high strength achieved in the joint avoids leakage between the flanges and the container body.

The invention also resides in a method of making a container, including the step of attaching a surface of a component of a polymeric material to a bare metal surface of a tubular metal body by means of an adhesive in such a manner that, in use, the adhesive joint between the said surfaces will be subjected to a shear mode of loading, wherein the adhesive is essentially composed of a polyolefin chemically modified to increase the content of polar groups so as to promote development of bond strength between the polymeric component and the metal. In carrying out the method, preferably the polymeric component and the bare metal surface are held together under light pressure and the bare metal surface is heated to a temperature above the melting point of both the polymeric material and the adhesive to form the bond between the polymeric component and the metal. The heating may be effected by spin-welding the polymeric component to the metal.

Containers according to the invention not only have the advantage of a reduced liability to corrosion and high strength but are also expected to be less costly to manufacture than conventional all-metal containers. In addition to tinplate, the container bodies may be made of tin-free steel, black plate or aluminium, all of which have been found to give bond strengths to the polymeric component which are in excess of those required for normal use.

Specific embodiments of the invention will now be described in more detail by way of example and with reference to the accompanying drawings,in which:-

FIGURE 1 is a perspective view of a container in accordance with the present invention, intended for containing water-based paint,

FIGURE 2 is an elevational view, to a larger scale, of a handle pivot lug of polymeric material fitted to the wall of the container of Figure 1,

FIGURE 2A is a view similar to Figure 2 showing a modified attachment of the pivot lug,

FIGURE 3 is a perspective view of a second embodiment of a container according to the invention, partly cut away for clarity and omitting the handle,

FIGURE 3A is a localised section through the top ring of Figure 3 and one of its pivot lugs,

FIGURE 4 is a perspective view of a third embodiment of a container according to the invention,

FIGURE 5 is a localised section through the junction of the handle and side wall of the container of Figure 4, and

FIGURE 6 is a vertical longitudinal section through the container of Figure 4.

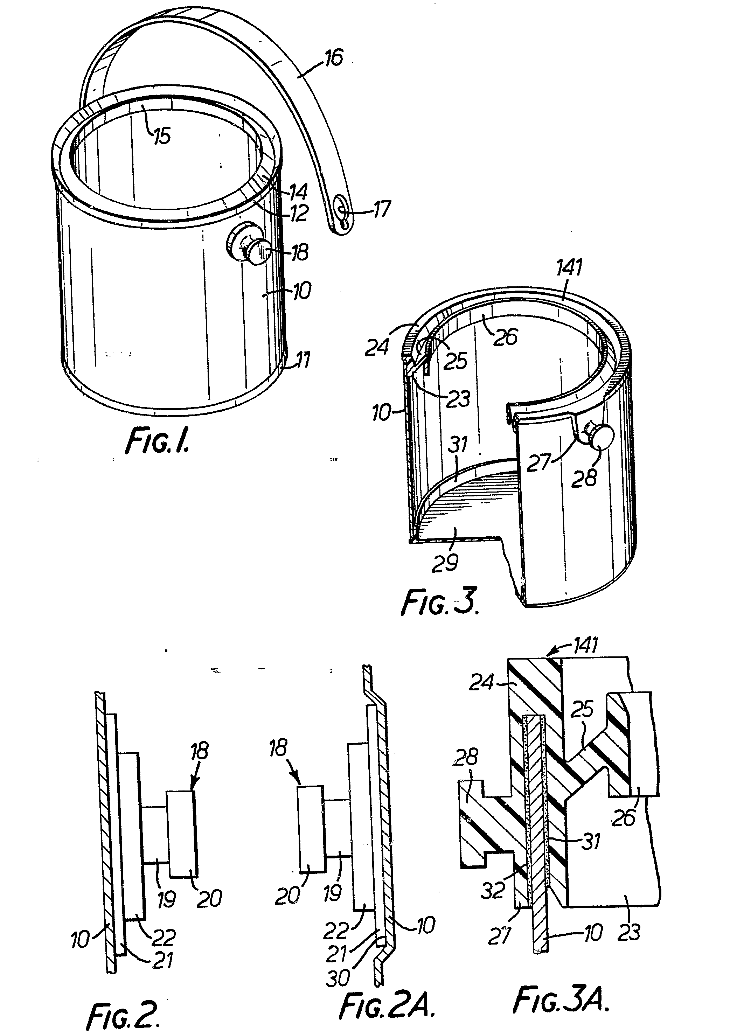

As shown in Figure 1, a metal container for water-based paint has a cylindrical body portion 10 seamed at 11 to a circular metal base and at 12 to a top ring 14 whose inner periphery 15 is adapted to receive a conventional plug-type lid (not shown). A carrying handle 16, formed for example of a strip of high density polyethylene, has end holes 17 for attaching it to the container.

For attaching the handle 16 to the container, a pair of pivot lugs 18 are provided, of which only one is visible in Figure 1. Each pivot lug 18 comprises a shank 19 (Figure 2) for engaging the end hole 17 in the handle 16, an enlarged head 20 for retaining the handle, and an enlarged flat circular base 21 by which the lug is attached to the outer surface of the wall of the container body 10. A circular boss 22 may also be provided around the inner end of the shank 19 to strengthen it.

The pivot lug 18 may be injection moulded from a propylene based copolymer, such as that supplied by ICI plc as PROPATHENE (Registered Trade Mark) Grade GYM202. It is attached to a bare metal portion of the surface of the container body 10 by means of an adhesive essentially composed of a polyolefin, preferably a polypropylene or a copolymer of propylene and ethylene, chemically modified to increase the content of polar groups. With the PROPATHENE copolymer referred to above, a suitable adhesive is a 15 weight percent dispersion of a maleic anhydride adduct of an ethylene/propylene copolymer in high boiling aliphatic hydrocarbons, as sold under the name MORPRIME 78LJ10 by Morton Chemical Division of Morton Norwich Products Inc.

To attach the pivot lugs 18, the appropriate areas of the surface of the container body 10 are cleared of the existing protective lacquer so as to leave a bare metal surface, or the appropriate areas are left bare when applying the lacquer by a stencil process. The adhesive is applied either to the bare metal areas of the container body or to the bases 21 of the pivot lugs 18 and is allowed to dry by driving off the dispersing medium, whereupon the adhesive particles form a layered deposit. The base 21 is then pressed lightly against the bare metal area of the container body and the metal is heated to a temperature between 180°C and 210°C for a sufficient time, i.e. not more than 5 seconds, to allow the adhesive and the surface of the base 21 to melt and fuse together and achieve a strong bond with the metal surface. The handle 16 is then fitted over the lugs 18.

A number of samples were made up in the foregoing manner, having capacities of 2.5 litres each, some with the adhesive applied to the metal surface and some with the adhesive applied to the surface of the base of the lug. These samples were then subjected to a standard drop test, which was also applied for comparison to samples of similar conventional containers having, firstly, metal rivets fixed through holes punched in the container body for attaching a plastics handle and, secondly, plastic rivets similarly clinched through holes punched in the container body for attaching a plastics handle.

The standard drop test comprises filling the container with a weight of 8.3 kg, being the weight of 5 litres of water-based paint, i.e. twice its normal load, fitting a lid to the container and subjecting it to a series of drops while it is attached to a gripping means simulating the grip of a human hand on the handle. The gripping means is attached to the lower end of a vertical calibrated rod which is movable vertically through a locking and releasing device and which carries at its top end an end stop for limiting its vertical movement and a coil spring surrounding the rod below the end stop so as to cushion the shock as the drop is terminated by the end stop contacting the locking and releasing device through the spring. The height of the drop can be adjusted by means of the locking and releasing device.

The following Table 1 summarises the results of the drop tests on containers where the pivot lugs were attached by means of adhesive applied to the metal surface of the container body 10. In all the tests whose results are given below, the pivot lugs were of the same dimensions, the base 21 having a diameter of 20 mm.

## TABLE 1

### RESULTS OF DROP TESTS

### (ADHESIVE APPLIED TO METAL SURFACE)

| Sample No. | Drop Height | Results | Remarks |
|:---:|:---:|:---:|:---:|
| 1 | 2.5 cm<br>5.0 cm<br>7.5 cm | passed 10 drops<br>passed 10 drops<br>failed at 6th drop | adhesive failure |
| 2 | 2.5 cm<br>5.0 cm<br>7.5 cm<br>10.0 cm<br>15.0 cm | passed 10 drops<br>passed 10 drops<br>passed 10 drops<br>passed 10 drops<br>failed | pivot lug broke |
| 3 | 2.5 cm<br>5.0 cm<br>7.5 cm | passed 10 drops<br>passed 10 drops<br>failed at 5th drop | pivot lug broke |
| 4 | 2.5 cm<br>5.0 cm<br>7.5 cm<br>10.0 cm<br>15.0 cm | passed 10 drops<br>passed 10 drops<br>passed 10 drops<br>passed 10 drops<br>failed | pivot lug broke |

The following Table 2 summarises the results of similar drop tests on containers where the pivot lugs were attached by means of adhesive applied to the surface of the base of the lug.

## TABLE 2

### RESULTS OF DROP TESTS

### (ADHESIVE APPLIED TO PLASTIC SURFACE)

| Sample No. | Drop Height | Results | Remarks |
|---|---|---|---|
| 1 | 2.5 cm | passed 10 drops | |
| | 5.0 cm | passed 10 drops | |
| | 7.5 cm | failed at 4th drop | pivot lug broke |
| 2 | 2.5 cm | passed 10 drops | |
| | 5.0 cm | passed 10 drops | |
| | 7.5 cm | failed at 4th drop | pivot lug broke |
| 3 | 2.5 cm | passed 10 drops | |
| | 5.0 cm | passed 10 drops | |
| | 7.5 cm | passed 10 drops | |
| | 10.0 cm | failed | pivot lug broke |
| 4 | 2.5 cm | passed 10 drops | |
| | 5.0 cm | passed 10 drops | |
| | 7.5 cm | failed 4th drop | pivot lug broke |
| 5 | 2.5 cm | passed 10 drops | |
| | 5.0 cm | passed 10 drops | |
| | 7.5 cm | failed at 3rd drop | pivot lug broke |

It will be seen from these Tables that the adhesive bond was such that in almost all cases the pivot lug broke before the adhesive bond was broken.

Following Table 3 represents the results of similar drop tests using a
standard height of drop of 7.54 cm and comparing containers in
accordance with the invention with conventional containers as described
above using rivets passing through holes punched in the walls of the
metal containers

TABLE 3

| Group | Description of Samples | No. of samples tested | Results and observation |
|-------|------------------------|-----------------------|-------------------------|
| I | Metal Rivet/Plastic Handle | 6 | 6 samples withstood 50 drops |
| II | Plastic rivet fixed by clinching/Plastics Handle | 6 | 6 samples withstood 50 drops |
| III | Plastic pivot lug heat bonded to metal surface (Adhesive applied on metal surface) | 6 | 5 samples withstood 50 drops<br>1 sample lug head failed at 44th drop<br>No adhesive bond failure |
| IV | Plastic pivot lug heat bonded to metal surface (Adhesive applied on lug surface) | 6 | 4 samples withstood 50 drops<br>1 sample lug head failed at 44th drop<br>1 sample lug head failed at 35th drop |

Again it will be seen that the adhesive bond was sufficiently strong to
withstand all the drop tests, though some of the pivot lugs failed.

To further demonstrate the adhesive bond strength developed by the
systems described above and also show that metal substrates other than
tinplate could be used, a series of tensile tests were carried out to
measure bond strength in shear.  Strips of various metals such as tin-free steel (TFS), tinplate (single and double reduced), aluminium and blackplate were coated with the adhesive consisting of the modified ethylene/propylene copolymer (MORPRIME 78 LJ 10) described above and heated to produce a dried adhesive layer. Pivot lugs of polypropylene copolymer were then bonded to the substrates as described above. A plastic handle was fitted over the pivot lug head and inserted into a jaw of an Instron tensometer, and the metal plate held in the other jaw.

The jaws were pulled apart in a direction parallel to the plate at a separation speed of 250 mm/min, thus stressing the joint in shear, and the bond strength of the assembly recorded together with mode of failure. Comparison was made with standard samples using metal rivets, and the results are given in Table 4.

## TABLE 4

### Bond Strength Results

AF - Adhesive Failure                    LF - lug failure

(Lug head, shank or base broken)

| Group | Description of Sample | Samples No. | Bond Strength N/pivot lug | |
|---|---|---|---|---|
| | | | Adhesive on Plastic Surface | Adhesive on Metal Surface |
| I | TFS/Plastic pivot lug | 1 | 360 N    LF | 375 N      LF |
| | | 2 | 360 N    AF | 400 N      LF |
| | | 3 | 345 N    LF | 355 N      LF |
| | | 4 | 350 N    LF | 360 N      LF |
| | | 5 | 320 N    AF | 355 N      LF |
| | | MEAN | 335 N | 369 N |
| II | Tinplate single reduced/ plastic pivot lug | 1 | 375 N    AF | 360 N    LF |
| | | 2 | 380 N    AF | 355 N    LF |
| | | 3 | 375 N    LF | 380 N    LF |
| | | 4 | 290 N    AF | 390 N    LF |
| | | 5 | 360 N    LF | 375 N    LF |
| | | MEAN | 356N | 372N |
| I | Tinplate double reduced/ plastic pivot lug | 1 | 340 N    LF | 320 N    LF |
| | | 2 | 380 N    LF | 350 N    LF |
| | | 3 | 300 N    AF | 320 N    LF |
| | | 4 | 375 N    LF | 375 N    LF |
| | | 5 | 360 N    LF | 375 N    LF |
| | | MEAN | 351N | 348N |

(Table 4 cont'd).

| Group | Description of Sample | Samples No. | Bond Strength N/pivot lug | |
|---|---|---|---|---|
| | | | Adhesive on Plastic Surface | Adhesive on Metal Surface |
| IV | Aluminium/ Plastic pivot lug | 1 | 210 N AF | 375 N LF |
| | | 2 | 220 N AF | 350 N LF |
| | | 3 | 150 N AF | 375 N LF |
| | | 4 | 175 N AF | 375 N LF |
| | | 5 | 160 N AF | 280 N AF |
| | | MEAN | 183N | 351N |
| V | Blackplate 0.21 Hard/ Plastic pivot lug | 1 | 150 N AF | 165 N AF |
| | | 2 | 150 N AF | 150 N AF |
| | | 3 | 230 N AF | 175 N AF |
| | | 4 | 220 N AF | 175 N AF |
| | | 5 | 210 N LF | 175 N AF |
| | | MEAN | 192N | 168N |

| Group | Description of Sample | Sample No. | Bond Strength N/rivet |
|---|---|---|---|
| VI | Mechanically clinched Plastic rivet | 1 | 375 N LF |
| | | 2 | 380 N LF |
| | | 3 | 375 N LF |
| | | 4 | 380 N LF |
| | | 5 | 375 N LF |
| | | MEAN | 377 N |
| VII | Metal rivet | 1 | 490 N Rivet off from body |
| | | 2 | 500 N Plastic handle failed |
| | | 3 | 455 N Bending of rivet |
| | | 4 | 490 N Rivet off from body |
| | | 5 | 490 N Bending of rivet |
| | | MEAN | 485 N |

To investigate the effect of substituting polyamide (nylon) pivot lugs for the polypropylene pivot lugs used in the foregoing tests, a series of sample rods of 20 mm diameter (i.e. the diameter of the base 21 of the pivot lugs) were injection moulded from nylon 6 and cut into cylindrical specimens. Tinplate test pieces were coated with differing coat weights of the same modified ethylene/propylene copolymer adhesive as used in the foregoing tests (MORPRIME 78 LJ 10) and the nylon cylinders were attached to the test pieces by applying a circular face of each cylinder to the coated test piece under pressure at a temperature of 350°C for a period of 5 to 8 seconds. Tensile tests to measure the bond strength in shear were then carried out in a similar manner to those described above whose results are given in Table 4, except that the plastic handle was replaced by an apertured jaw fitting over the nylon cylinder. The bond strengths measured in Newtons per pivot lug are tabulated in Table 5.

TABLE 5

| Sample No. | COAT WEIGHT ON TINPLATE | | |
|---|---|---|---|
| | Low 2.5 to 3.0 g.m.$^{-2}$ | High 5.0 to 6.0 g.m.$^{-2}$ | Very High 8.0 to 9.0 g.m.$^{-2}$ |
| 1 | 350 N | 500 N + | 500 N + ) Approximately |
| 2 | 450 N | 650 N | 750 N ) 60% adhesion |
| 3 | 600 N | 600 N | 650 N ) surface |
| 4 | 650 N | 600 N | 800 N ) area. |
| 5 | 500 N | 680 N | 900 N * * Almost 80% contact between Nylon & metal |

It will be seen that for a plastic pivot lug, whether of polypropylene
or of nylon, the method of adhesive bonding can result in similar
strengths to the mechanical clinching or rivetting method.  It is also
seen that very high bond strength values are achieved between the
plastic pivot lug and all the material surfaces tested; even in the
case of blackplate, where these are the lowest, they are sufficiently
high to be considered functionally useful for a 5 litre container.

Figure 2A illustrates a modification in which the base 21 of the pivot
lug 18 is attached inside a work-hardened recess 30 in the metal side
wall 10 which protects the lug-to-metal wall bond in the event of
mechanical abuse to the can wall, i.e. the recess 30 isolates the lug
18 from any damage to the rest of the side wall 10.  Preferred depth of
the recess 30 is dependant on the metal cylinder wall thickness used,
up to 2 mm being considered adequate for most wall thicknesses used for
containers up to 5 litre size.

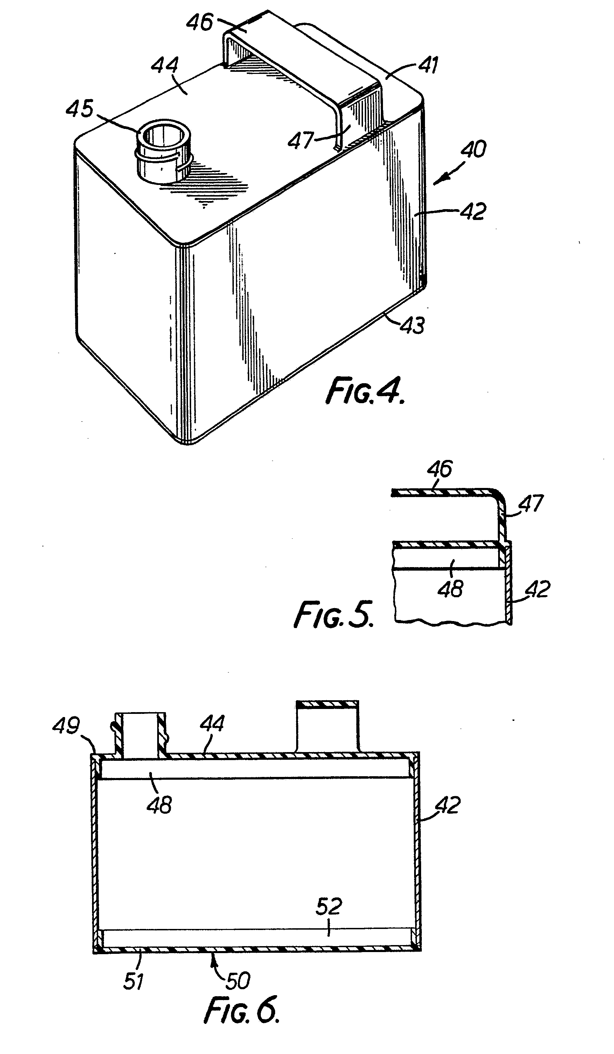

An alternative construction of container according to the invention is
illustrated in Figure 3, where the metal top ring 14 of the embodiment
of Figure 1 is replaced by a top ring 141 of a polymeric material,
specifically a polypropylene copolymer of the type referred to above.
The top ring 141 has an annular flange 23 whose outer surface engages
the inner surface of the wall of the container body 10 and an outwardly
extending collar 24 which fits over the upper end of the wall of the
container body.  An inwardly extending frustoconical portion 25 extends
from the annular flange 23 to support a cylindrical portion 26 adapted
to receive a conventional plug-type lid (not shown).  A pair of ears 27
(of which only one is shown in Figure 3) depend from the collar 24 and
carry a pair of diametrically opposed pivot lugs 28 similar to the
pivot lugs 18 of Figure 1.  The top ring 141 of Figure 3 is attached to
the wall of the container body 10 by means of the same adhesive as
described above, which is applied at 31 between the outer surface of
the flange 23 and the inner surface of the top of the container wall,
and at 32 between the inner surface of the ear 27 and the outer surface
of the container wall.  The protective lacquer is removed from these locations on the container wall before fitting the top ring 141.

Such a construction of container may have a base made from a metal disc and attached to the body 10 by the technique known to the industry as double-seaming as in Figure 1. Alternatively, as shown in Figure 3, it may also include a circular base or end wall 29 which is made of a polymeric material, specifically a polypropylene copolymer of the type referred to above, and comprises a panel spanning the end of the body and an annular flange 31 extending axially of the body. The outer surface of the flange 31 fits within the lower end of the body 10 and engages the inner surface of the wall of the body. The polymeric base 29 is attached to the wall of the container body 10 by means of the same adhesive as described above, between the outer surface of the flange 31 and the inner surface of the bottom of the container wall 10, from which the protective lacquer has been removed before fitting the polymeric base. Drop tests on containers as shown in Figure 3, filled with water, did not result in any leaks through the joint between the top ring 141 and the wall of the container, or between the polymeric base 29 and the wall of the container, showing that adequate bonds and seals were created.

In the further alternative construction illustrated in Figures 4 to 6, the container 40 is rectangular and has a top member 41 of plastics material, a side wall 42 of sheet metal dependent from the periphery of the top member, and a bottom member 43 of plastics material closing the bottom of the side wall 42. Both the top member 41 and bottom member 43 are moulded from a propylene based copolymer such as that used for the pivot lugs 18 of Figures 1 and 2 and for the top ring 141 and base 29 of Figures 3 and 3A and are adhered to the side wall 42 using the same adhesive as in the previously described embodiments. The side wall 42 is preferably a sheet of metal folded and mesh welded to form a tube of accurate rectangular cross-section to ensure a good fit with the top and bottom members.

The top member 41 comprises a planar panel 44 spanning the side wall
42; a closable pouring spout 45 upstanding from the planar panel; and a
carrying handle 46 in the form of an arch which crosses from side to
side of the planar panel 44.

Whilst a threaded pouring spout 45 is shown, suitable for receiving a
threaded cap, other forms of closure may be used such as a snap fit cap
or even a simple orifice in the planar panel closed by a plug.  However
it is desirable for the pouring orifice or plug to have a height
approximately equal to that of the handle 46 so that a similar
container may be stacked on the container shown.

In Figure 5 it will be seen that the side portion 47 of the handle 46
is aligned with a flange 48 extending from the planar panel 44 into
engagement with the interior of the side wall 42 all round the
container.  This arrangement directs the load in the side portion of
the handle directly onto the adhesive bond of flange 48 to metal side
wall 42; the adhesive is therefore in the shear mode of loading which
adhesive bonds cope with best.  Furthermore the plug-like fit of flange
48 in the side wall 42 reduces any risk of distortion under load
converting the forces on the adhesive bond into an undesirable peeling
mode.

Figure 6 shows more clearly the extent of the flange 48 of the planar
panel 44 and its entry into the side wall 42 which is limited by an
overhanging portion 49 which abuts the upper end of the side wall 42.
A bottom member 50 having a closure panel 51 and an upstanding flange
52 closes the bottom of the side wall 42.  The upstanding flange 52 is
adhered to the interior of the side wall 42, the bond being
mechanically equivalent to that used to fix the top member 41 to the
side wall.

Instead of using a propylene based copolymer for the polymeric
components (top ring 141 and base 29 of Figs. 3 and 3A and members 41
and 43 of Figs. 4 to 6) one may use a polyamide such as the nylon 6 referred to above.   The results of the tests given in Table 5 show that similar or better bond strengths can be obtained.   Since nylon 6 is resistant to solvent attack, the containers of Figs. 3 and 3A or Figs. 4 to 6 could then be used for solvent-based paints or other non-aqueous liquids.

CLAIMS

1.    A container comprising a tubular body and at least one component of a polymeric material attached thereto, wherein a surface on the polymeric component is attached by adhesive to a complementary cooperating surface of the tubular body in such a manner that, in use, the adhesive joint between the said surfaces is subjected to a shear mode of loading, characterised in that the said surface of the body is a bare metal surface and the adhesive is essentially composed of a polyolefin chemically modified to increase the content of polar groups so as to promote development of bond strength between the polymeric component and the metal.

2.    A container according to claim 1 characterised in that the polyolefin is a polypropylene or a copolymer of propylene and ethylene, and the content of polar groups is increased by addition of at least one of the group of additives consisting of maleic anhydride, maleic acid and acrylic acid.

3.    A container according to claim 1 or 2 characterised in that the polymeric material of the component is a polyolefin or a polyamide.

4.    A container according to any one of the preceding claims wherein the metal body is coated with a protective lacquer except over the surface to which the polymeric component is attached.

5.    A container according to any one of the preceding claims characterised in that the polymeric component is a pivot lug which retains an end of a curved carrying handle, the pivot lug having an enlarged base providing the surface which is attached by the adhesive to the surface of the metal body.

6.    A container according to claim 5 characterised in that the surface of the metal body to which the base of the pivot lug is attached lies within a recess in the side wall of the body, to protect the bond between the lug and the wall from damage.

7.    A container according to any one of the preceding claims characterised in that the polymeric component is an end ring having a flange extending axially of the tubular body, the flange carrying the surface which is attached by the adhesive to the bare metal surface of the body.

8.    A container according to claim 7 characterised in that the flange of the end ring fits within one end of the tubular body.

9.    A container according to claim 7 or 8 characterised in that the polymeric ring is attached to the top end of the tubular body and carries a pair of pivot lugs for retaining the ends of a curved carrying handle.

10.    A container according to claims 8 and 9 characterised in that each pivot lug projects from an extension of the ring and the extension is also attached by the adhesive to a further bare metal surface on the outside of the tubular body.

11.    A container according to any one of the preceding claims characterised in that the polymeric component is an end wall for the tubular body, said end wall comprising a panel spanning the end of the body and a flange extending axially of the body, the flange carrying the surface which is attached by the adhesive to the bare metal surface of the body.

12.    A method of making a container, including the step of attaching a surface of a component of a polymeric material to a surface of a tubular body by means of an adhesive in such a manner that, in use, the adhesive joint between the said surfaces will be subjected to a shear mode of loading, characterised in that the said surface of the body is a bare metal surface and the adhesive is essentially composed of a polyolefin chemically modified to increase the content of polar groups so as to promote development of bond strength between the polymeric component and the metal.

13. A method according to claim 12 characterised in that the polymeric component and the bare metal surface are held together under light pressure and the bare metal surface is heated to a temperature above the melting point of both the polymeric material and the adhesive to form the bond between the polymeric component and the metal.

14. A method according to claim 13 characterised in that the heating is effected by spin-welding the polymeric component to the metal.

0147057

1/2

FIG. I.

FIG. 2.

FIG. 2A.

FIG. 3.

FIG. 3A.

FIG.4.

FIG.5.

FIG.6.